# EUROPÄISCHE PATENTSCHRIFT

(11) **EP 3 002 851 B1**
(45) Veröffentlichungstag und Bekanntmachung des Hinweises auf die Patenterteilung: **13.09.2017**
(21) Anmeldenummer: 14187088.1
(22) Anmeldetag: 30.09.2014
(51) Int. Cl.: H02K 1/02, H02K 11/20

(54) **Element einer elektrischen Maschine mit Metallschaum**
Element of an electric machine with a metal foam
Élément d'une machine électrique doté de mousse métallique

(43) Veröffentlichungstag der Anmeldung: 06.04.2016
(73) Patentinhaber: Siemens Aktiengesellschaft, 80333 München (DE)
(72) Erfinder: Bittner, Roland, 91522 Ansbach (DE); Hösle, Markus, 91058 Erlangen (DE)

(56) Entgegenhaltungen:
- DE-A1-102005 058 066
- DE-A1-102009 025 929
- DE-A1-102009 045 283
- DE-A1-102009 051 975
- DE-A1-102011 103 335

## Beschreibung

Für elektrische Maschinen kann es verschieden Anforderungen geben. Elektrische Maschinen, wie dynamoelektrische Maschinen, können beispielsweise besonders effizient und/oder besonders leicht gebaut werden. Insbesondere bei Anwendungen im Fahrzeugbau oder der Luftfahrindustrie wird das Verhältnis Leistung pro Gewicht betrachtet. Dieses Verhältnis kW/kg betrifft die ganze elektrische Maschine, aber auch nur Teile davon, wie z.B. den Stator oder den Rotor. Stator und/oder Rotor können als ein Element der elektrischen Maschine so ausgeführt sein, dass diese Blechpakete aufweisen. Die Blechpakete von Stator und Rotor sind u.a. die schwereren Teile der dynamoelektrischen Maschine. Die Bemühungen das Verhältnis kW/kg zu erhöhen, betreffen deshalb in vorderster Linie die Reduzierung der Gewichte der Blechpakete. Dabei soll aber trotzdem der für den Betrieb der elektrischen Maschine (der dynamoelektrischen Maschine) erforderliche Magnetfluss gewährleistet sein, ohne den magnetischen Widerstand im Magnetkreis unzulässig zu erhöhen, was sich auf den Wirkungsgrad und damit auf das Verhältnis kW/kg negativ auswirken würde.

Als Ersatz für die klassischen Blechpakete zur Führung des Magnetfeldes sind paketierte Kugelpakete oder gewickelte Statoren bekannt. Dabei wird eine Gewichtsersparnis erzielt.

Nachteilig dabei ist jedoch, dass entweder nur Punktkontakt oder Linienkontakt zwischen den einzelnen Elementen (Kugeln oder Drähten) vorliegt, was den magnetischen Widerstand erhöht und damit das Verhältnis kW/kg verschlechtert. Außerdem ist die Herstellung vergleichsweise aufwändig.

Aus der DE 10 2009 051 975 A1 ist ein Lineardirektantrieb mit einem stabilen und gewichtsoptimiertem Profilelement sowie ein kostengünstiges Verfahren zum Herstellen eines derartigen Profilelements bekannt. Der Lineardirektantrieb betrifft einen Stator und einen relativbeweglich am Stator gelagerten Läufer, wobei der Läufer oder der Stator ein langgestrecktes metallisches Profilelement umfasst. Es ist vorgesehen, dass das Profilelement wenigstens eine Außenwand aus einem ferromagnetischen Massivmaterial umfasst, die an einen ferromagnetischen Metallschaumkern angrenzt, wobei sich die Außenwand und der Metallschaumkern in Längsrichtung des Profilelements erstrecken.

Aus der DE 10 2009 025 929 A1 ist ein Läuferaufbau für eine permanentmagneterregte, rotierende elektrische Maschine, bei der am Außenumfang des Läufers Elektroblechpakete mit dazwischenliegenden Permanentmagneten angeordnet sind, gekannt. Es liegt ein segmentierter Läuferaufbau in der Form vor, dass auf der Welle des Läufers eine innere Buchse angeordnet ist, die Lüfterschaufeln trägt, die bis zu einer äußeren Buchse reichen, wobei die innere Buchse, die Lüfterschaufeln und die äußere Buchse als tragender Läufergrundkörper ausgebildet ist und die äußere Buchse Nuten am Außenumfang in Längsrichtung für die Aufnahme von im Fußbereich komplementär aufgebauten einzelnen Elektroblechpaketen besitzt und zwischen den Elektroblechpaketen Permanentmagnete angeordnet sind, wobei der tragende Läufergrundkörper aus Keramik, nichtmagnetischem Stahl, Aluminiumschaum und/oder Blechen aus nichtmagnetischem Stahl oder Aluminium besteht.

Eine Aufgabe der Erfindung ist es ein Element einer elektrischen Maschine derart auszubilden, dass das Verhältnis von Leistung (kW) der elektrischen Maschine zum Gewicht der elektrischen Maschine (kg) verbessert wird. Die elektrische Maschine soll also mehr Leistung pro Kilogramm im Verhältnis zu anderen elektrischen Maschinen haben. Dies resultiert in einer weiteren Aufgabe, nämlich der Reduzierung des Gewichtes zumindest eines Elementes der elektrischen Maschine. Ein Rotor oder ein Stator der elektrischen Maschine sind Beispiele für deren Elemente.

Eine Lösung der Aufgabe gelingt bei einem Element der elektrischen Maschine mit Merkmalen nach Anspruch 1, bzw. bei einem Verfahren nach Anspruch 10. Ausgestaltungen des Elementes der elektrischen Maschine ergeben sich nach Merkmalen gemäß der Ansprüche 2 bis 9. Eine Ausgestaltung des Verfahrens ergibt sich gemäß Anspruch 12.

Die Aufgabe sowie deren Lösung betrifft auch die elektrische Maschine selbst mit einem derartigen Element.

Ein Element einer elektrischen Maschine weist einen Metallschaum auf. Das Element ist beispielsweise ein Stator, ein Rotor, ein Blechpaket oder ein Gehäuse der elektrischen Maschine. Der Stator und/oder der Rotor sind in einer Ausgestaltung aus einem Metallschaum aufgebaut oder weisen diesen auf, wobei der Metallschaum Nuten zur Aufnahme elektrischer Leiter aufweist. Als Metallschaum wird ein poröser Schaum auf der Basis von metallischen Werkstoffen bezeichnet. Der Metallschaum ist eine Art Metallschwamm, welcher sich mittels verschiedenster Verfahren herstellen lässt. Das Metall für den Metallschaum ist derart wählbar, dass ein magnetischer Fluss leicht führbar ist. Beispiele für Metalle sind Eisen oder Aluminium. Aluminiumschäume sind in der Automobilindustrie beispielsweise als Crashschutzelemente bekannt.

Metallschäume haben eine durch Poren und Hohlräume bedingte geringe Dichte. Damit ist es möglich ein geringes Gewicht bei hoher spezifischer Steifigkeit und Festigkeit zu realisieren. Derartige Schäume können aus unterschiedlichen Metallen, wie Kupfer, Zink, Stahl bzw. Eisen unter Verwendung geeigneter Treibmittel hergestellt werden. Beispielsweise werden Metallschäume mittels Metallpulver und einem Metallhydrid hergestellt. Beide Pulver werden miteinander vermischt und danach durch Heißpressen oder Strangpressen zu einem Vormaterial verdichtet. Anschließend wird dieses Vormaterial auf eine Temperatur oberhalb des Schmelzpunktes des jeweilig verwendeten Metalls erhitzt. Dabei setzt das Metallhydrid gasförmigen Wasserstoff frei und schäumt das Gemenge auf. Alternativ zu dieser Herstellungsmethode kann Gas in eine Metallschmelze eingeblasen werden, die zuvor durch Zugabe fester Bestandteile schäumbar gemacht wurde.

Die durch verschiedene Fertigungsverfahren entstehenden Schäume können weiterhin in Einphasenschäume, Zweiphasenschäume und Mehrphasenschäume unterteilt werden. Der einphasige Schaum hat als Preform beispielsweise metallische Hohlkugeln. Der Zweiphasenschaum hat als Preform beispielsweise mit Metall beschichtete keramische Hohlkugeln. Der Mehrphasenschaum weist keramische Hohlkugeln mit einem zusätzlichen Bindemittel auf. Metallschäume sind derart variabel ausbildbar, dass sich diese durch eine große Vielzahl unterschiedlicher Strukturen und Werkstoffeigenschaften auszeichnen können. Die durch Hohlräume oder Poren geschaffene Porosität der Schäume reduziert die Dichte der Bauteile deutlich und damit das Gesamtgewicht einer Konstruktion oder eines Elementes wie einen Ersatz für ein Blechpaket.

Zur Herstellung des Metallschaums sind auch klassische Herstellverfahren ähnlich der Herstellung eines Schaumstoffes geeignet. Dies beinhaltet ein physikalisches Schäumen, bei welchem das Material durch einen physikalischen Vorgang geschäumt wird.

Auch auf einer chemischen Basis kann ein Schäumen erfolgen. Beim chemischen Schäumen wird beispielsweise einem Granulat ein Treibmittel, meist in Form eines so genannten Masterbatchgranulates, zugegeben. Durch Wärmezufuhr kann sich dann ein flüchtiger Bestandteil des Treibmittels abspalten, was zum Aufschäumen der Metallschmelze führt.

Eine weitere Option ist das mechanische Schäumen. Hierbei wird beispielsweise Luft oder ein anderes Gas in das zu schäumende Metall oder eine metallische Paste eingerührt. Durch ein Vernetzen des Metalls oder durch Gelieren der Paste verfestigt sich dieser Metallschaum.

In einer Ausgestaltung des Elements ist der Metallschaum eine Tragstruktur. Die Tragstruktur ist derart ausgebildet, dass diese mechanische Kräfte aufnehmen kann, bzw. weitere Elemente der elektrischen Maschine trägt. So kann der Rotor der elektrischen Maschine beispielsweise eine Welle aufweisen, auf welcher der Metallschaum befestigt ist. Der Metallschaum kann eine zylindrische Gestalt haben, wobei auf der zylindrischen Außenfläche Magnete angebracht sind. Die Magnete werden vom Metallschaum getragen. Dieser Aufbau kann bei einer permanenterregten Synchronmaschine Verwendung finden. Weist ein Stator Zahnspulen auf und ist der Zahn aus Metallschaum, so trägt dieser Zahn als Tragstruktur die Zahnwicklung.

Der Metallschaum als Basis für einen Stator oder Rotor gewährleistet eine Gewichtsersparnis. Der Metallschaum ist derart ausbildbar, dass dieser ausreichend metallische Stege zwischen den Hohlräumen aufweist, um eine ausreichende Führung eines magnetischen Feldes zu gewährleisten. Vorteilhaft liegen im Metallschaum ausreichend viele metallische Stege zwischen den Hohlräumen vor, um eine nahezu verlustfreie Führung des Magnetflusses zu gewährleisten. Dabei ist insbesondere auch die Ausrichtung der Stege in Richtung des gewünschten Magnetflusses von Vorteil. Die eingeschlossenen Hohlräume des Metallschaums (Poren) dienen vorteilhaft auch der Unterdrückung von Wirbelströmen, was bei den klassischen Blechpaketen durch schichtweisen Aufbau gewährleistet werden kann.

In einer Ausgestaltung von Stator bzw. Rotor der elektrischen Maschine weisen diese eine Nut auf. Diese Nut, bzw. eine Vielzahl von Nutzen dient der Aufnahme von elektrischen Leitern. Dies ist im Fall des Stators beispielsweise die Wicklung und im Fall des Rotors bei einer Asynchronmaschine ein Teil des Käfigs. Die Nut bzw. die Nuten werden durch den Metallschaum ausgebildet. Die Nuten können durch eine Form beim Schäumen entstehen oder nach dem Schäumen nachträglich in den Metallschaum eingearbeitet werden, was z.B. mit einem Fräsvorgang möglich ist.

Der Metallschaum kann als ein geschlossenzelliger Metallschaum, als ein offenzelliger Metallschaum oder als ein gemischtzelliger Metallschaum ausgebildet sein. Bei einem geschlossenzelligen Metallschaum sind die Wände zwischen den einzelnen Zellen (geschlossene Poren) komplett geschlossen. Die Wände werden durch Stege gebildet. Bei dem offenzelligen Metallschaum sind die Zellwände nicht geschlossen, die so ausgebildeten Poren können daher Flüssigkeiten oder Gase z.B. zur Kühlung aufnehmen. Bei dem gemischtzelligen Metallschaum gibt es offenzellige und geschlossenzellige Strukturen im Metallschaum.

In einer Ausgestaltung des Elementes weist der Metallschaum unterschiedliche Metalle auf. Dies kann beispielsweise bedeuten, dass eine Legierung geschäumt ist, oder dass unterschiedliche Bereiche eines Schaumes vorzugsweise unterschiedliche Konzentrationen unterschiedlicher Metalle aufweisen. Es können auch Metallschäume aus verschiedenen Metallen mit verschiedenen Materialeigenschaften z.B. Schmelztemperaturen nacheinander verarbeitet werden. Liegen bei den unterschiedlichen Metallen unterschiedliche Schmelztemperaturen vor, so kann in einer Vielzahl von Arbeitsschritten (also zumindest in zwei Schritten) eine Struktur geschaffen werden, welche eine vorangehende ergänzt, ohne das Ausgangsmaterial des vorherigen Arbeitsschritts zu gefährden. Das Ausgangsmaterial der Ausgangsstruktur weist dann also eine höhere Schmelztemperatur auf, als das Material, das für einen nachfolgenden Arbeitsschritt, also z.B. ein nachfolgendes Schäumen, verwendet wird.

In einem Bereich der elektrischen Maschine in dem im Betrieb der elektrischen Maschine hohe Temperaturen zu erwarten sind (hot-spot), kann als Material für den Metallschaum ein temperaturfesteres Material eingesetzt werden.

In einer weiteren Ausgestaltung des Elements weist dieses ein Phasenwechselmaterial (phase change material) auf. Das Phasenwechselmaterial kann Temperaturänderungen ausgleichen und somit zu einer verbesserten Kühlung der elektrischen Maschine beitragen. Das Phasenwechselmaterial ist beispielsweise in den Metallschaum integriert. Zwischen den Stegen des Schaumes (also in den Poren) wo sich z.B. Luft befinden kann, kann sich auch das Phasenwechselmaterial befinden.

In einer Ausgestaltung des Elementes der elektrischen Maschine weist dieses einen Integralschaum auf. Der Integralschaum kann insbesondere bei dem Stator bzw. dem Rotor der elektrischen Maschine eingesetzt werden. Bei einem Integralschaum kann die Porengröße unterschiedlich eingestellt werden. Die Dichte der Poren wird im Herstellungsprozess gesteuert. Damit kann der Metallschaum derart ausgestaltet sein, dass in den Bereichen des Stators oder Rotors, wo eine erhöhte Magnetliniendichte auftritt (also ein hoher magnetischer Fluss vorliegt), auch vermehrt Stege vorhanden sind, die einen nahezu verlustfreien Magnetfluss gewährleisten. Beispielsweise sind im Bereich des Stators die Zähne mit einer anderen Dichte zu versehen wie der Jochrücken. Die Stege sind vorteilhaft parallel zum Flussverlauf ausgerichtet.

Zur Herstellung eines Elementes der elektrischen Maschine geeignet, ist auch das MuCell-Verfahren. Dabei wird einer thermoplastischen Kunststoffschmelze ein inertes Gas (entweder Stickstoff oder Kohlendioxid) zugeführt und im Schmelzzylinder zu einer Einphasenlösung gemischt. Beim Einspritzen dieser Einphasenlösung in die Kavität des Spritzgieß- oder Blasformwerkzeugs, bzw. bei der Extrusion bei Austritt aus der Düse, erfährt das Gemisch einen Druckabfall. Dies führt dazu, dass das Gas über das Bauteil verteilt nukleiert und eine Vielzahl (insbesondere Millionen) von kleinsten Zellen wachsen. Diese Zellen ersetzen ein definiertes Volumen bzw. nehmen dieses ein, was zu einer Dichtereduzierung im Bauteil führt.

Durch die Verwendung von Metallschäumen als Basis z.B. für Statoren und/oder Rotoren können die dynamoelektrischen Maschinen wesentlich leichter ausgeführt werden. Eine Anpassung an vorgegebene Rahmenbedingungen wie Achshöhe, Gehäuseform etc. lässt sich erreichen, indem das Material bearbeitet wird oder gleich während des Herstellverfahrens wie gewünscht mit den erforderlichen Eigenschaften geformt wird. Dies ist insbesondere bei der Verwendung des Integralschaums gegeben. Wird ein Blechpaket des Stators oder des Rotors durch ein Element aus Metallschaum ersetzt, so ist dieser Teil nunmehr einteilig ausführbar. Der gesamte Grundkörper von Stator bzw. Rotor ist dann einteilig, so dass es nicht mehr notwendig ist Blechpakete zu stanzen, zu paketieren und zu fixieren. Stator und Rotor können aber auch aus einer Vielzahl von Metallschaumteilen zusammengefügt werden. Metallschaumteile lassen sich beispielsweise verkleben oder schweißen.

In einer Ausgestaltung des Elements weist dieses Scheiben aus Metallschaum auf, also Metallschaumscheiben. Diese Metallschaumscheiben sind axial (in Hinblick auf die Rotationsachs der elektrischen Maschine) reihbar. Hieraus ergibt sich eine Art Paket von Metallschaumscheiben. Damit lassen sich Statoren bzw. Rotoren unterschiedlicher axialer Länge einfach herstellen.

In einer Ausgestaltung des Elements weist dieses Metallschaumscheiben auf, wobei die Metallschaumscheiben für den Rotor vorgesehen sind und an einer zylindrischen Außenseite Magnete aufweisen. Die Magnete sind beispielsweise auf die zylindrische Oberfläche des Metallschaumteils des Rotors geklebt. Aus mit Magneten bestückten Metallschaumscheiben sind durch axiale Verklebung der Scheiben vorgebbare Rotorlängen für eine permanenterregte Synchronmaschine herstellbar.

Dynamoelektrische Maschinen mit einem guten Verhältnis von elektrischer Leistung zu Gewicht eignen sich für viele Anwendungen bei denen es vor allem auf leichte Antriebe ankommt (kW/kg). Dies ist insbesondere bei Flugzeugen mit einem elektrischen Antrieb (e-Plane) oder auch bei Straßenfahrzeugen mit einem elektrischen Antrieb (z.B. e-car) der Fall. Natürlich profitieren auch Schienenfahrzeuge von einer hohen Leistung pro kg. Beispiele hierfür sind Traktionsantriebe bei Loks, Triebzügen und Straßenbahnen.

In einem Verfahren zur Herstellung eines Elementes der elektrischen Maschine, wie dieses obig beispielhaft beschrieben ist, wird in einer Form ein Metallschaum erzeugt. Die Form bildet die Gestalt eines Blechpaketes des Stators oder Rotors der elektrischen Maschine nach. In dem nachgebildeten Stator bzw. dem nachgebildeten Statorblechpaket befinden sich folglich Nuten für die Statorwicklung. Im Fall einer Asynchronmaschine kann der Käfig des Rotors beispielsweise vorgefertigt sein, wobei die nachgebildete Form des Blechpaketes des Rotors zumindest einen Teil des Käfigs umschließt und der Metallschaum um zumindest Teile des Käfigs erzeugt wird. Der Kurzschlussring des Käfigs kann außerhalb des Metallschaums oder innerhalb des Metallschaums positioniert sein.

In einer Ausgestaltung des Verfahrens werden geschlossene Hohlräume im Metallschaum mit einem Gas befüllt. Wird nun der Metallschaum beschädigt und somit ein Hohlraum geöffnet, so tritt dieses Gas aus. Mittels eines Sensors kann der Gasaustritt detektiert werden. Dies verbessert den Service für die elektrische Maschine, da Beschädigungen leichter erkannt werden können, indem der Gassensor austretendes Gas aus dem Metallschaum detektiert. Als Gas kann beispielsweise CO oder Wasserstoff verwendet werden.

Im Folgenden wird die Erfindung exemplarisch anhand der in den Figuren dargestellten Ausführungsbeispiele näher beschrieben und erläutert. Es zeigen:
- FIG 1: einen Zahn eines Stators einer elektrischen Maschine; und
- FIG 2: Poren eines Metallschaums mit gerichteten Stegen

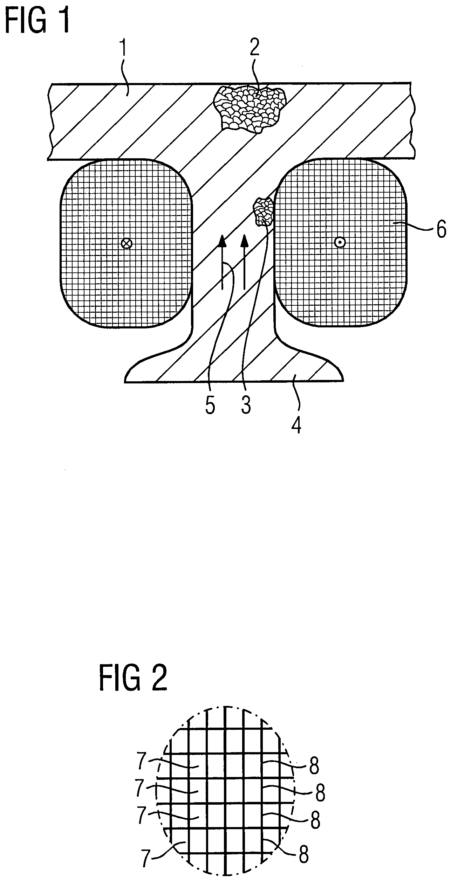

Die Darstellung nach FIG 1 zeigt beispielhaft einen Zahn 4 eines Stators 1 einer elektrischen Maschine. Der Zahn 4 mit einer Zahnwicklung 6, weist Metallschaum auf, wobei dieser im Bereich seiner Zähne eine höhere Porendichte 3 aufweist, als im Bereich des Jochrückens, wo die Porendichte 2 kleiner ist. Bei hoher Porendichte gibt es viele Poren pro Volumeneinheit und bei kleiner Porendichte gibt es weniger Poren pro Volumeneinheit. Ist die Porendichte hoch, so bessert sich die magnetische Leitfähigkeit (und damit der magnetische Fluss 5) im Vergleich zu einem Bereich mit niedrigerer Porendichte.

Die Darstellung nach FIG 2 zeigt in einem Detailausschnitt des Zahnes bzw. des Metallschaums, dass die Poren 7 parallel ausgerichtet sind, um die magnetische Leitfähigkeit zu verbessern. Die Poren 7 weisen Stege 8 auf, welche ähnlich eines Rechteckgitters positioniert sind. Verläuft nun das Magnetfeld parallel zu Stegen 8, so ist der magnetische Fluss optimiert, wenn das Gitter entsprechend dem Fluss ausgerichtet ist, zu diesem also parallel verläuft.

## Patentansprüche

1. Element (1) einer elektrischen Maschine, welches einen Metallschaum (2,3) aufweist, wobei das Element (1) ein Stator und/oder ein Rotor der elektrischen Maschine ist, **dadurch gekennzeichnet, dass** der Metallschaum (2,3) Nuten zur Aufnahme elektrischer Leiter aufweist.

2. Element (1) nach Anspruch 1, wobei der Metallschaum (2,3) eine Tragstruktur ist.

3. Element (1) nach Anspruch 1 oder 2, wobei der Metallschaum (2,3) ein geschlossenzelliger Metallschaum (2,3) ist.

4. Element (1) nach Anspruch 1 oder 2, wobei der Metallschaum (1) ein offenzelliger Metallschaum (2,3) ist.

5. Element (1) nach einem der Ansprüche 1 bis 4, wobei der Metallschaum (2,3) ein gemischtzelliger Metallschaum (2,3) ist.

6. Element (1) nach einem der Ansprüche 1 bis 5, wobei der Metallschaum (2,3) verschiedene Metalle aufweist.

7. Element (1) nach einem der Ansprüche 1 bis 6, wobei das Element (1) ein Phasenwechselmaterial aufweist.

8. Element (1) nach einem der Ansprüche 1 bis 7, wobei der Metallschaum (2,3) ein Integralschaum ist.

9. Element (1) nach einem der Ansprüche 1 bis 8, wobei das Element (1) Metallschaumscheiben aufweist, welche axial reihbar sind.

10. Verfahren zur Herstellung eines Elementes (1) nach einem der Ansprüche 1 bis 9, wobei in einer Form ein Metallschaum (2,3) erzeugt wird und die Form eine Gestalt eines Blechpaketes eines Stators oder Rotors einer elektrischen Maschine nachbildet.

11. Verfahren zum Betrieb oder zur Herstellung einer elektrischen Maschine, wobei geschlossene Hohlräume des Metallschaums (2,3) mit einem Gas befüllt werden oder sind, wobei bei einer Beschädigung des Metallschaums das Gas austritt und von einem Sensor detektiert wird.

## Claims

1. Element (1) of an electric machine which has a metal foam (2, 3), wherein the element (1) is a stator and/or a rotor of the electric machine, **characterised in that** the metal foam (2, 3) has grooves for accommodating electric conductors.

2. Element (1) according to claim 1, wherein the metal foam (2, 3) is a supporting structure.

3. Element (1) according to claim 1 or 2, wherein the metal foam (2, 3) is a closed-cell metal foam (2, 3).

4. Element (1) according to claim 1 or 2, wherein the metal foam (1) is an open-cell metal foam (2, 3).

5. Element (1) according to one of claims 1 to 4, wherein the metal foam (2, 3) is a mixed-cell metal foam (2, 3).

6. Element (1) according to one of claims 1 to 5, wherein the metal foam (2, 3) comprises different metals.

7. Element (1) according to one of claims 1 to 6, wherein the element (1) comprises a phase change material.

8. Element (1) according to one of claims 1 to 7, wherein the metal foam (2, 3) is an integral foam.

9. Element (1) according to one of claims 1 to 8, wherein the element (1) comprises metal foam discs which can be axially arranged.

10. Method for manufacturing an element (1) according to one of claims 1 to 9, wherein a metal foam (2, 3) is produced in a mould and the mould reproduces a shape of a laminated core of a stator or rotor of an electric machine.

11. Method for operating or for manufacturing an electric machine, wherein closed cavities of the metal foam (2, 3) are filled with a gas, wherein in the event of the metal foam being damaged the gas escapes and is detected by a sensor.

## Revendications

1. Elément (1) d'une machine électrique, qui a une mousse (2, 3) métallique, l'élément (1) étant un stator et/ou un rotor de la machine électrique, **caractérisé en ce que** la mousse (2, 3) métallique a des rainures de réception de conducteur électrique.

2. Elément (1) suivant la revendication 1, dans lequel la mousse (2, 3) métallique est une structure porteuse.

3. Elément (1) suivant la revendication 1 ou 2, dans lequel la mousse (2, 3) métallique est une mousse (2, 3) métallique à pore fermé.

4. Elément (1) suivant la revendication 1 ou 2, dans lequel la mousse (1) métallique est une mousse (2, 3) métallique à pore ouvert.

5. Elément (1) suivant l'une des revendications 1 à 4, dans lequel la mousse (2, 3) métallique est une mousse (2, 3) métallique à pore mixte.

6. Elément (1) suivant l'une des revendications 1 à 5, dans lequel la mousse (2, 3) métallique a des métaux différents.

7. Elément (1) suivant l'une des revendications 1 à 6, dans lequel l'élément (1) a un matériau à changement de phase.

8. Elément (1) suivant l'une des revendications 1 à 7, dans lequel la mousse (2, 3) métallique est une mousse intégrale.

9. Elément (1) suivant l'une des revendications 1 à 8, dans lequel l'élément (1) a des disques de mousse métallique, qui peuvent être rangés axialement.

10. Procédé de fabrication d'un élément (1) suivant l'une des revendications 1 à 9, dans lequel on produit une mousse (2, 3) métallique dans un moule et le moule reproduit une forme d'un paquet de tôles d'un stator ou d'un rotor d'une machine électrique.

11. Procédé pour faire fonctionner ou pour fabriquer une machine électrique, dans lequel des cavités fermées de la mousse (2, 3) métallique sont emplies d'un gaz, dans lequel, s'il se produit un endommagement de la mousse métallique, le gaz sort et est détecté par un capteur.
